# EUROPÄISCHE PATENTSCHRIFT

(11) **EP 1 937 772 B1**
(45) Veröffentlichungstag und Bekanntmachung des Hinweises auf die Patenterteilung: **17.12.2008**
(21) Anmeldenummer: 06793774.8
(22) Anmeldetag: 25.09.2006
(51) Int. Cl.: C08L 33/12, C08L 25/12, C08L 51/00

(54) **THERMOPLASTISCHE FORMMASSEN MIT VERBESSERTEN OPTISCHEN EIGENSCHAFTEN**
THERMOPLASTIC PLASTIC MOULDING COMPOSITIONS WITH IMPROVED OPTICAL PROPERTIES
MATIERES DE MOULAGE THERMOPLASTIQUES A PROPRIETES OPTIQUES AMELIOREES

(30) Priorität: 30.09.2005 DE 102005047463
(43) Veröffentlichungstag der Anmeldung: 02.07.2008
(73) Patentinhaber: BASF SE, 67056 Ludwigshafen (DE)
(72) Erfinder: WEBER, Martin, 67487 Maikammer (DE); GOTTSCHALK, Axel, 67435 Neustadt (DE); ITTEMANN, Peter, 68623 Lampertheim (DE); HÖNL, Hans, 67271 Obersülzen (DE)
(86) Internationale Anmeldenummer: PCT/EP2006/066664
(87) Internationale Veröffentlichungsnummer: WO 2007/036495

(56) Entgegenhaltungen:
- WO-A-97/08241
- WO-A-20/05059029
- WO-A-20/05075560

## Beschreibung

Die vorliegende Erfindung betrifft thermoplastische Formmassen, enthaltend eine Mischung aus
(A) 30 bis 69 Gew.-%, bezogen auf die Summe der Komponenten (A), (B) und (C), eines Methylmethacrylat-Polymerisates, erhältlich durch Polymerisation einer Mischung, bestehend aus
   (A1) 90 bis 100 Gew.-%, bezogen auf (A), Methylmethacrylat,und
   (A2) 0 bis 10 Gew.-%, bezogen auf (A), eines C₁-C₈-Alkylesters der Acrylsäure, und
(B) 30 bis 69 Gew.-%, bezogen auf die Summe der Komponenten (A), (B) und (C), eines Copolymerisates, erhältlich durch Polymerisation einer Mischung, bestehend aus
   (B1) 75 bis 88 Gew.-%, bezogen auf (B), eines vinylaromatischen Monomeren und
   (B2) 12 bis 25 Gew.-%, bezogen auf (B), eines Vinylcyanids
   und
(C) 1 bis 40 Gew.-%, bezogen auf die Summe der Komponenten (A), (B) und (C), eines Pfropfcopolymerisates, erhältlich aus
   (C1) 60 bis 90 Gew.-%, bezogen auf (C), eines Kerns, erhältlich durch Polymerisation eines Monomerengemisches, bestehend aus
      (C11) 65 bis 89,9 Gew.-%, bezogen auf (C1), eines 1,3-Diens,
      (C12) 10 bis 34,9 Gew.- % bezogen auf (C1), eines vinylaromatischen Monomeren,
      (C13) 0,1 bis 5 Gew.-%, bezogen auf (C1), eines Agglomerationspolymerisates
      und
   (C2) 5 bis 20 Gew.-%, bezogen auf (C), einer ersten Pfropfhülle, erhältlich durch Polymerisation eines Monomerengemisches, bestehend aus
      (C21) 30 bis 39 Gew.-%, bezogen auf (C2), eines vinylaromatischen Monomeren
      (C22) 61 bis 70 Gew.-%, bezogen auf (C2), eines C₁-C₈-Alkylesters der Methacrylsäure und
      (C23) 0 bis 3 Gew.-%, bezogen auf (C2), eines vernetzenden Monomeren,
      und
   (C3) 5 bis 20 Gew.-%, bezogen auf (C), einer zweiten Pfropfhülle, erhältlich durch Polymerisation eines Monomerengemisches, bestehend aus
      (C31) 70 bis 98 Gew.-%, bezogen auf (C3), eines C₁-C₈-Alkylesters der Methacrylsäure und
      (C32) 2 bis 30 Gew.-%, bezogen auf (C3), eines C₁-C₈-Alkylesters der Acrylsäure,
   und
(D) gegebenenfalls üblichen Zusatzstoffen in Mengen von bis zu 20 Gew.-%, bezogen auf die Summe der Komponenten (A), (B) und (C),
mit der Maßgabe, dass das Gewichtsverhältnis von (C2) zu (C3) im Bereich von 2:1 bis 1:2 liegt.

Weiterhin betrifft die vorliegende Erfindung ein Verfahren zur Herstellung der erfindungsgemäßen thermoplastischen Formmassen, deren Verwendung und die daraus erhältlichen Formkörper.

Aus WO 97/08241 sind Formmassen bekannt, die aus einem harten Methylmethacrylat-Polymerisat, einem harten Vinylaromat-Vinylcyanid-Polymerisat und einem weichen Pfropfcopolymerisat umfassend einen kautschukelastischen Pfropfkern, eine erste Pfropfhülle aus einem Vinylaromat-Alkylmethacrylat-Polymerisat und eine zweite Pfropfhülle aus einem Alkyl(meth)acrylat-Polymerisat, aufgebaut sind. Diese Formmassen zeichnen sich durch gute Schlagzähigkeit, hohe Fließfähigkeit, hohe Lichttransmission, geringen Streulichtanteil und geringen Kantengelbstich aus.

Zur Verbesserung der mechanischen Eigenschaften thermoplastischer Formmassen ist der Einsatz von kautschukelastischen Pfropfcopolymerisaten bekannt, bei denen der Pfropfkern aus vergleichsweise großen agglomerisierten Teilchen besteht, die während der Herstellung der Pfropfkerne durch Zugabe eines Agglomerisationspolymerisats erhältlich sind. Solche Formmassen auf Basis unterschiedlichster Kunststoffmatrices sowie deren Herstellverfahren sind beispielsweise beschrieben in WO 01/83574 und WO 02/10222. Üblicherweise weisen solche thermoplastischen Formmassen enthaltend Pfropfkerne aus vergleichsweise großen agglomerisierten Teilchen aber verschlechterte optische Eigenschaften auf.

In DE 102004006193.9 (Aktenzeichen) werden thermoplastische Formmassen auf Basis harter Methylmethacrylat-Polymerisate, harter Vinylaromat-Vinylcyanid-Polymerisate und agglomerierter Pfropfcopolymerisate mit speziellen Teilchengrößen und speziellen Verteilungen derselben beschrieben, die sowohl gute mechanische als auch optische Eigenschaften besitzen.

Der vorliegenden Erfindung lag die Aufgabe zugrunde, thermoplastische Formmassen auf Basis harter Methylmethacrylat-Polymerisate, harter Vinylaromat-Vinylcyanid-Polymerisate und weicher Pfropfcopolymerisate zur Verfügung zu stellen, die unter weitgehendem Erhalt der guten mechanischen Eigenschaften weiter verbesserte optische Eigenschaften, insbesondere eine niedrigere Lichtstreuung, aufweisen.

Demgemäß wurden die eingangs definierten thermoplastischen Formmassen gefunden, wobei erfindungswesentlich ist, dass der Kern (C1) eine monomodale Teilchengrößenverteilung aufweist, die mittlere Teilchengröße D₅₀ des Kerns (C1) (bestimmt nach der im folgenden beschriebenen Methode) im Bereich von 300 bis 400 nm liegt und der Betrag der Differenz aus Brechungsindex (n_{D}-C) der Gesamtkomponente (C) und dem Brechungsindex (n_{D}-AB) der Gesamtmatrix der Komponenten (A) und (B) im Bereich von 0,003 bis 0,008 liegt, wobei die Brechungsindices jeweils nach den im folgenden beschriebenen Methoden bestimmt werden.

Des weiteren wurde ein Verfahren zu deren Herstellung, ihre Verwendung zur Herstellung von Formkörpern sowie Formkörper, enthaltend die erfindungsgemäßen thermoplastischen Formmassen, gefunden.

Die erfindungsgemäßen thermoplastischen Formmassen, Verfahren, Verwendungen und Formkörper werden im folgenden beschrieben.

Die erfindungsgemäßen thermoplastischen Formmassen enthalten
(A) 30 bis 69 Gew.-%, vorzugsweise von 32,5 bis 57,5 Gew.-%, jeweils bezogen auf die Summe der Komponenten (A), (B) und (C), eines Methylmethacrylat-Polymerisates, erhältlich durch Polymerisation einer Mischung, bestehend aus
   (A1) 90 bis 100 Gew.-%, vorzugsweise von 92 bis 98 Gew.-%, jeweils bezogen auf (A), Methylmethacrylat, und
   (A2) 0 bis 10 Gew.-%, vorzugsweise von 2 bis 8 Gew.-%, jeweils bezogen auf (A), eines C₁-C₈-Alkylesters der Acrylsäure
(B) 30 bis 69 Gew.-%, vorzugsweise von 32,5 bis 57,5 Gew.-%, jeweils bezogen auf die Summe der Komponenten (A), (B) und (C), eines Copolymerisates, erhältlich durch Polymerisation einer Mischung, bestehend aus
   (B1) 75 bis 88 Gew.-%, vorzugsweise von 79 bis 85 Gew.-%, jeweils bezogen auf (B), eines vinylaromatischen Monomeren und
   (B2) 12 bis 25 Gew.-%, vorzugsweise von 15 bis 21 Gew.-%, jeweils bezogen auf (B), eines Vinylcyanids
   und
(C) 1 bis 40 Gew.-%, vorzugsweise von 10 bis 35 Gew.-%, jeweils bezogen auf die Summe der Komponenten (A), (B) und (C), eines Pfropfcopolymerisates, erhältlich aus
   (C1) 60 bis 90 Gew.-%, vorzugsweise von 70 bis 80 Gew.-%, jeweils bezogen auf (C), eines Kerns mit einer monomodalen Teilchengrößenverteilung und mit einer mittleren Teilchengröße D₅₀ (bestimmt nach der im folgenden beschriebenen Methode) im Bereich von 300 bis 400 nm, bevorzugt von 320 bis 380 nm, besonders bevorzugt von 340 bis 360 nm, erhältlich durch Polymerisation eines Monomerengemisches, bestehend aus
      (C11) 65 bis 89,9 Gew.-%, vorzugsweise von 70 bis 84,5 Gew.-%, jeweils bezogen auf (C1), eines 1,3-Diens,
      (C12) 10 bis 34,9 Gew.-%, vorzugsweise von 15 bis 29,5 Gew.-%, jeweils bezogen auf (C1), eines vinylaromatischen Monomeren, und
      (C13) 0,1 bis 5 Gew.-%, vorzugsweise von 0,1 bis 2 Gew.-%, jeweils bezogen auf (C1), eines Agglomerationspolymerisates,
      und
   (C2) 5 bis 20 Gew.-%, vorzugsweise von 10 bis 15 Gew.-%, jeweils bezogen auf (C), einer ersten Pfropfhülle, erhältlich durch Polymerisation eines Monomerengemisches, bestehend aus
      (C21) 30 bis 39 Gew.-%, vorzugsweise von 30 bis 35 Gew.-%, besonders bevorzugt von 31 bis 35 Gew.-%, jeweils bezogen auf (C2), eines vinylaromatischen Monomeren
      (C22) 61 bis 70 Gew.-%, vorzugsweise von 63 bis 70 Gew.-%, besonders bevorzugt von 63 bis 68 Gew.-%, jeweils bezogen auf (C2), eines C₁-C₈-Alkylesters der Methacrylsäure und
      (C23) 0 bis 3 Gew.-%, vorzugsweise von 0 bis 2 Gew.-%, besonders bevorzugt von 1 bis 2 Gew.-%, jeweils bezogen auf (C2), eines vernetzenden Monomeren
      und
   (C3). 5 bis 20 Gew.-%, vorzugsweise von 10 bis 15 Gew.-%, jeweils bezogen auf (C), einer zweiten Pfropfhülle, erhältlich durch Polymerisation eines Monomerengemisches, bestehend aus
      (C31) 70 bis 98 Gew.-%, vorzugsweise von 75 bis 92 Gew.-%, jeweils bezogen auf (C3), eines C₁-C₈-Alkylesters der Methacrylsäure und
      (C32) 2 bis 30 Gew.-%, vorzugsweise von 8 bis 25 Gew.-%, jeweils bezogen auf (C3), eines C₁-C₈-Alkylesters der Acrylsäure,
   und
(D) gegebenenfalls üblichen Zusatzstoffen in Mengen von bis 20 Gew.-%, vorzugsweise von 0 bis 10 Gew.-%, jeweils bezogen auf die Summe der Komponenten (A), (B) und (C).

Die in den erfindungsgemäßen thermoplastischen Formmassen verwendeten Methylmethacrylat-Polymerisate (A) sind entweder Homopolymerisate aus Methylmethacrylat (MMA) oder Copolymerisate aus MMA mit bis zu 10 Gew.-%, bezogen auf (A), eines C₁-C₈-Alkylesters der Acrylsäure.

Als C₁-C₈-Alkylester der Acrylsäure (Komponente A2) kann man Methylacrylat, Ethylacrylat, Propylacrylat, n-Butylacrylat, n-Pentylacrylat, n-Hexylacrylat, n-Heptylacrylat, n-Octylacrylat und 2-Ethylhexylacrylat sowie Mischungen davon einsetzen, vorzugsweise Methylacrylat, Ethylacrylat, n-Butylacrylat, 2-Ethylhexylacrylat oder Mischungen davon, besonders bevorzugt Methylacrylat.

Die Methylmethacrylat-(MMA)-Polymerisate können durch Substanz-, Lösung- oder Perlpolymerisation nach bekannten Methoden hergestellt werden (siehe beispielsweise Kunststoff-Handbuch, Band IX, "Polymethacrylate", Vieweg/Esser, Carl-Hanser-Verlag 1975) und sind im Handel erhältlich. Bevorzugt setzt man Methylmethacrylat-Polymerisate ein, deren Gewichtsmittelwerte M_{w} der Molmassen im Bereich von 60.000 bis 300.000 g/mol liegen (bestimmt durch Lichtstreuung in Chloroform).

Die Komponente (B) ist ein Copolymerisat aus einem vinylaromatischen Monomeren (B1) und Vinylcyanid (B2).

Als vinylaromatische Monomere (Komponente B1) kann man Styrol, ein- bis dreifach mit C₁-C₈-Alkylresten substituiertes Styrol wie p-Methylstyrol oder tert.-Butylstyrol sowie α-Methylstyrol, bevorzugt Styrol, einsetzen.

Als Vinylcyanid (Komponente B2) kann man Acrylnitril und/oder Methacrylnitril, bevorzugt Acrylnitril, einsetzen.

Außerhalb des oben angegebenen Bereiches der Zusammensetzung der Komponente (B) erhält man üblicherweise bei Verarbeitungstemperaturen über 240°C trübe Formmassen, die Schlieren aufweisen.

Die Copolymerisate (B) können nach bekannten Verfahren hergestellt werden, wie durch Substanz-, Lösung-, Suspensions- oder Emulsions-Polymerisation, bevorzugt durch Lösungspolymerisation (siehe GB-A 14 72 195). Bevorzugt sind dabei Copolymerisate (B) mit Molmassen M_{w} von 60.000 bis 300.000 g/mol, bestimmt durch Lichtstreuung in Dimethylformamid.

Als Komponente (C) wird ein Pfropfcopolymerisat verwendet, aus einem Kern (C1) und zweier darauf aufgebrachter Pfropfhüllen (C2) und (C3).

Der Kern (C1) stellt die Pfropfgrundlage dar und weist einen Quellungsindex Ql von 15 bis 50, insbesondere von 20 bis 40 auf, bestimmt durch Quellungsmessung in Toluol bei Raumtemperatur.

Als 1,3-Dien (Komponente C11) des Kerns des Pfropfcopolymerisats (Komponente C1) kann man Butadien und/oder Isopren einsetzen.

Als vinylaromatisches Monomer (Komponente C12) kann man Styrol oder vorzugsweise am Kern mit einer, vorzugsweise in α-Steillung, oder auch mehreren C₁-C₈-Alkylgruppe(n), vorzugsweise Methyl, substituiertes Styrol einsetzen.

Als Agglomerisationspolymerisat (Komponente C13) können dem Fachmann bekannte und beispielsweise in WO 01/83574, WO 02/10222 oder DE-A 24 27 960 beschriebene Stoffe eingesetzt werden. Als Agglomerationspolymerisate geeignet sind beispielsweise Dispersionen von Acrylesterpolymerisaten, bevorzugt von Copolymerisaten aus Ethylacrylat und Methacrylamid, in denen der Anteil an Methacrylamid 0,1 bis 20 Gew.-%, bezogen auf das Copolymerisat, beträgt. Die Konzentration der Acrylesterpolymerisate in der Dispersion beträgt vorzugsweise 3 bis 40 Gew.-%, besonders bevorzugt 5 bis 20 Gew.-%.

Die Herstellung des Kerns (C1) erfolgt in zwei Stufen nach dem Fachmann bekannten und beispielsweise in Encyclopedia of Polymer Science and Engineering, Vol. 1, S. 401 ff., beschriebenen Verfahren. Üblicherweise stellt man in der ersten Stufe aus den Komponenten (C11) und (C12) nach dem Fachmann bekannten Verfahren, beispielsweise der Emulsionspolymerisation, (siehe beispielsweise Encyclopedia of Polymer Science and Engineering, Vol. 1, S. 401 ff) einen Kern her, der bevorzugt eine Glasübergangstemperatur von kleiner als 0°C aufweist, und dessen mittlere Teilchengröße D₅₀ in der Regel im Bereich von 30 bis 240 nm, bevorzugt im Bereich von 50 bis 180 nm, liegt. In einer zweiten Stufe erfolgt nach dem Fachmann bekannten und beispielsweise,in Encyclopedia of Polymer Science and Engineering, Vol. 1, S. 401 ff., beschriebenen Verfahren die Umsetzung des in der ersten Stufe erhaltenen Kerns mit dem Agglomerationspolymerisat (C13), wobei der Kern (C1) mit einer mittleren Teilchengröße D₅₀ (bestimmt nach der im folgenden beschriebenen Methode) im Bereich von 300 bis 400 nm, bevorzugt von 320 bis 380 nm, besonders bevorzugt von 340 bis 360 nm, erhalten wird. Erfindungsgemäß weist der Kern (C1) eine monomodale Teilchengrößenverteilung auf.

Auf den Kern (C1) wird die Pfropfhülle (C2) aufgebracht, welche die Monomere (C21), (C22) und gegebenenfalls (C23) enthält.

Als vinylaromatisches Monomer (Komponente C21) kann man Styrol oder vorzugsweise am Kern mit einer, vorzugsweise in α-Stellung, oder auch mehreren C₁-C₈-Alkylgruppe(n), vorzugsweise Methyl, substituiertes Styrol einsetzen.

Als C₁-C₈-Alkylester der Methacrylsäure (Komponente C22) verwendet man erfindungsgemäß Methylmethacrylat (MMA), Ethylmethacrylat, n-, i-Propylmethacrylat, n-Butylmethacrylat, Isobutylmethacrylat, sek.-Butylmethacrylat, tert.-Butylmethacrylat, Pentylmethacrylat, Hexylmethacrylat, Heptylmethacrylat, Octylmethylacrylat oder 2-Ethylhexylmethacrylat, wobei Methylmethacrylat besonders bevorzugt ist, sowie Mischungen dieser Monomere.

Als Monomere (C23) können übliche vernetzend wirkende Monomere eingesetzt werden, also im wesentlichen di -oder polyfunktionelle Comonomere, insbesondere Alkylenglykoldi(meth)acrylate wie Ethylen-, Propylen- und Butylenglykoldi(meth)acrylat, Allylmethacrylat, (Meth)acrylate von Glycerin, Trimethylolpropan, Pentaerythrit oder Vinylbenzole wie Di -oder Trivinylbenzol. Bevorzugt wird Butylenglykoldimethacrylat, Butylenglykoldiacrylat und Dihydrodicyclopentadienylacrylat in Form eines Isomerengemischs, besonders bevorzugt Dihydrodicyclopentadienylacrylat in Form eines Isomerengemischs, eingesetzt.

Auf die Pfropfhülle (C2) wiederum wird eine weitere Pfropfhülle (C3) aufgebracht, welche die Monomere (C31) und (C32) aufweist. Die Monomere (C31) sind C₁-C₈-Alkylester der Methacrylsäure, bei den Monomeren (C32) handelt es sich um C₁-C₈-Alkylester der Acrylsäure.

Als C₁-C₈-Alkylester der Methacrylsäure (Monomere C31) verwendet man erfindungsgemäß Methylmethacrylat (MMA), Ethylmethacrylat, n-, i-Propylmethacrylat, n-Butylmethacrylat, Isobutylmethacrylat, sek.-Butylmethacrylat, tert.-Butylmethacrylat, Pentylmethacrylat, Hexylmethacrylat, Heptylmethacrylat, Octylmethylacrylat oder 2-Ethylhexylmethacrylat, wobei Methylmethacrylat besonders bevorzugt ist, sowie Mischungen dieser Monomere.

Als C₁-C₈-Alkylester der Acrylsäure (Monomere C32) kann man Methylacrylat (MA), Ethylacrylat, Propylacrylat, n-Butylacrylat, Isobutylacrylat, sek.-Butylacrylat, tert.-Butylacrylat, Pentylacrylat, Hexylacrylat, Heptylacrylat, Octylacrylat oder 2-Ethylhexylacrylat, wobei Methylacrylat besonders bevorzugt ist, sowie Mischungen dieser Monomere untereinander einsetzen.

Die Herstellung der beiden Pfropfhüllen (C2) und (C3) erfolgt in Gegenwart des Kerns (C1) nach literaturbekannten Methoden, insbesondere durch Emulsionspolymerisation (Encyclopedia of Polymer Science and Engineering, Vol. 1, Seite 401 ff.). Durch die dabei angewandte sogenannte Saatfahrweise werden bei der Herstellung der beiden Pfropfhüllen keine neuen Teilchen gebildet. Darüber hinaus ermöglicht es die Saatfahrweise die Zahl und die Art der Teilchen in beiden Pfropfstufen durch die Menge und die Art des eingesetzten Emulgators zu bestimmen. Die Emulsionspolymerisation wird üblicherweise durch Polymerisationsinitiatoren ausgelöst.

Bei der Emulsionspolymerisation können ionogene und nicht ionogene Emulgatoren verwendet werden.

Geeignete Emulgatoren sind beispielsweise Dioctylnatriumsulfosuccinat, Natriumlaurylsulfat, Natriumdodecylbenzolsulfonat, Alkylphenoxypolyethylensulfonate und Salze von langkettigen Carbon- und Sulfonsäuren.

Als nichtionogene Emulgatoren sind beispielsweise Fettalkoholpolyglykolether, Alkylarylpolyglykolether, Fettsäuremonoethanolamide sowie ethoxylierte Fettsäureamide und -amine geeignet.

Bezogen auf das Gesamtgewicht des Emulsionspfropfcopolymerisates liegt die Gesamtemulgatormenge vorzugsweise bei 0,05 bis 5 Gew.-%.

Als Polymerisationsinitiatoren können Ammonium- und Alkaliperoxodisulfate wie Kaliumperoxodisulfat sowie Initiatorkombinationssysteme wie Natriumpersulfat, Natriumhydrosulfit, Kaliumpersulfat, Natriumformaldehydsulfoxylat und Kaliumperoxodisulfat, Natriumdithionit-Eisen-II-sulfat verwendet werden, wobei die Polymerisationstemperatur im Fall der thermisch zu aktivierenden Ammonium- und Alkaliperoxodisulfate bei 50 bis 100°C und bei den Initiatorkombinationen, die als Redoxsysteme wirksam sind, darunter liegen kann, etwa im Bereich von 20 bis 50°C.

Die gesamte Initiatormenge liegt vorzugsweise zwischen 0,02 und 1,0 Gew.-%, bezogen auf das fertige Emulsionspolymerisat.

Sowohl bei der Herstellung der Grundstufe, d.h. des Kerns (C1), als auch bei der Herstellung der beiden Pfropfstufen, d.h. der beiden Pfropfhüllen (C2) und (C3), können ferner Polymerisationsregler eingesetzt werden. Als Polymerisationsregler dienen u.a. Alkylmercaptane wie beispielsweise n- oder tert. -Dodecylmercaptan. Die Polymerisationsregler werden üblicherweise in einer Menge von 0,01 bis 1,0 Gew.-%, bezogen auf die jeweilige Stufe, eingesetzt.

Im übrigen wird das erfindungsgemäß zu verwendende Emulsionspfropfcopolymerisat so hergestellt, dass man eine wässrige Mischung, bestehend aus Monomeren, Vernetzer, Emulgator, Initiator, Regler und einem Puffersystem in einem mit Stickstoff inertisierten Reaktor vorlegt, in der Kälte unter Rühren inertisiert und dann im Laufe von 15 bis 120 Minuten auf die Polymerisationstemperatur bringt. Anschließend wird bis zu einem Umsatz von mindestens 95 % polymerisiert. Monomere, Vernetzer, Emulgator, Initiator und Regler können auch komplett oder teilweise als Zulauf der wässrigen Vorlage zugeführt werden.

Gegebenenfalls nach einer Nachreaktionszeit von 15 bis 120 Minuten werden die Stufen (C2) und (C3) unter Zulauf der Monomeren in Gegenwart der bereits gebildeten Stufe (C1) durch Emulsionspolymerisation erzeugt.

Die erfindungsgemäßen thermoplastischen Formmassen zeichnen sich ferner u.a. dadurch aus, dass das Gewichtsverhältnis der ersten Pfropfhülle (C2) zur zweiten Pfropfhülle (C3) im Bereich von 2:1 bis 1:2 liegt.

Die Isolierung des Emülsionspfropfcopolymerisates aus dem erhaltenen Latex erfolgt auf bekannte Weise durch Ausfällung, Filtration und anschließender Trocknung. Für die Ausfällung können beispielsweise wässrige Lösungen von anorganischen Salzen wie Natriumchlorid, Natriumsulfat, Magnesiumsulfat und Calciumchlorid, wässrige Lösungen von Salzen der Ameisensäure wie Magnesiumformiat, Calciumformiat und Zinkformiat, wässrige Lösungen von anorganischen Säuren wie Schwefel- und Phosphorsäure sowie wässrige ammoniakalische und aminische Lösungen sowie andere wässrige alkalische Lösungen, z.B. von Natrium- und Kaliumhydroxid verwendet werden. Die Fällung kann aber auch durch physikalische Methoden, beispielsweise Gefrierfällung, Scherfällung, Dampffällung erfolgen.

Die Trocknung kann beispielsweise durch Gefrier-, Sprüh-, Wirbelschicht- und Umlufttrocknung erfolgen.

Das ausgefällte Emulsionspfropfcopolymerisat kann auch ohne Trocknung weiterverarbeitet werden.

Das Pfropfcopolymerisat (C) weist vorzugsweise einen Quellungsindex Ql von 10 bis 40, insbesondere von 12 bis 35 auf. Der Quellungsindex wird dabei durch Quellungsmessung in Toluol bei Raumtemperatur bestimmt.

Als übliche Zusatzstoffe (D) kommen alle solchen Substanzen in Betracht, die sich in den Komponenten (A), (B) und (C) gut lösen, beziehungsweise mit diesen gut mischbar sind. Geeignete Zusatzstoffe sind u.a. Farbstoffe, Stabilisatoren, Schmiermittel und Antistatika.

Die Herstellung der erfindungsgemäßen Formmassen aus den Komponenten (A), (B), (C) und gewünschtenfalls (D) erfolgt nach dem Fachmann bekannten Verfahren, beispielsweise durch Mischen der Komponenten in der Schmelze mit dem Fachmann bekannten Vorrichtungen bei Temperaturen im Bereich von 200 bis 300°C, insbesondere bei 200 bis 280°C.

In einer bevorzugten Ausführungsform sind die erfindungsgemäßen thermoplastischen Formmassen dadurch charakterisiert, dass der Betrag der Differenz aus Brechungsindex (n_{D}-C) der Gesamtkomponente (C) und dem Brechungsindex (n_{D}-AB) der Gesamtmatrix der Komponenten (A) und (B) im Bereich von 0,003 bis 0,008, insbesondere im Bereich von 0,004 bis 0,007 liegt.

Die genannten Brechungsindices sind jeweils nach den im folgenden noch genannten Methoden (siehe Beispiele) zu bestimmen.

Aus den erfindungsgemäßen thermoplastischen Formmassen können hauptsächlich durch Spritzgießen oder durch Formblasen Formteile hergestellt werden. Die thermoplastischen Formmassen können aber auch verpresst, kalandriert, extrudiert oder vakuumgeformt werden.

Die erfindungsgemäßen thermoplastischen Formmassen zeichnen sich dadurch aus, daß sie bei weitgehendem Erhalt der guten mechanischen Eigenschaften weiter verbesserte optische Eigenschaften, insbesondere eine niedrigerer Lichtstreuung, aufweisen.

### Beispiele

In den nachfolgenden erfindungsgemäßen Beispielen und den Vergleichsbeispielen wurden jeweils thermoplastische Formmassen hergestellt und folgende Eigenschaften ermittelt:

### Brechungsindex n_{D} [dimensionslos]:

Die Brechungsindices (n_{D}-C) und (n_{D}-AB) wurden an Folien gemessen, die aus den jeweiligen Polymeren (C) oder Polymermischungen aus den Komponenten (A) und (B) in einer IWK-Presse bei 200°C und einem Druck von 3 - 5 bar 2 min vorgepresst und abschließend bei 200°C und 200 bar 3 min nachgepresst wurden. Die Messungen wurden bei 20°C mit einem Abbe-Refraktometer nach der Methode zur Messung der Brechungsindizes bei festen Körpern durchgeführt (s. Ullmanns Encyklopädie der technischen Chemie, Band 2/1, S. 486, Herausgeber E. Foerst; Urban & Schwarzenberg, München-Berlin 1961).

### Fließfähigkeit MVI [ml/10 min]:

Als Maß für die Fließfähigkeit wurde der Melt-Volume-Index MVI 220/10 gemäß DIN EN ISO 1133 bestimmt.

### Kerbschlagzähigkeit aₖ [kJ/m²]:

Die Kerbschlagzähigkeit aₖ wurde gemäß ISO 179 1eA(F) bei 23°C bestimmt.

### Schädigungsarbeit Ws [Nm]

Die Schädigungsarbeit wurde an Platten mit den Abmessungen 60 mm x 60 mm x 2 mm (Länge x Breite x Höhe) nach ISO 6603 ermittelt.

### Transmission [%]:

Die Transmission wurde gemäß DIN 53236 an Platten mit einer Dicke von 2 mm bestimmt.

### Haze [%]:

Als Maß für die Lichtstreuung wurde der Haze-Wert gemäß ASTM D 1003 an Probekörpern mit einer Dicke von 2 mm bestimmt.

### mittlere Teilchengröße D₅₀:

Die mittlere Teilchengröße D₅₀ und die Teilchengrößenverteilung der Pfropfcopolymerisat-Kerne (C1) wurden durch Bildauswertung von transmissionselektronenmikroskopischen ("TEM") Aufnahmen bestimmt. Dabei wurde die Software analysis 3.0 verwendet und die Kerne (C1) als kreisförmige Gebilde angenähert. Es wurden die Teilchendurchmesser von mindestens 500 Kernen (C1) bestimmt, der Mittelwert dieser Bestimmungen ist die mittlere Teilchengröße D₅₀. Die Teilchengrößenverteilung wurde anhand des erhaltenen Histograms qualitativ als monomodal, bimodal oder polymodal eingestuft.

### Herstellung der Formmassen:

Als Komponente A wurde ein Copolymerisat aus 95,5 Gew.-% Methylmethacrylat und 4,5 Gew.-% Methylacrylat mit einer Viskositätszahl VZ von 70 ml/g (bestimmt als 0,5 gew.-%-ige Lösung in Dimethylformamid bei 23°C nach DIN 53727) und einem Brechungsindex von 1,4921 eingesetzt.

Als Komponente B wurde ein Copolymerisat aus 81 Gew.-% Styrol und 19 Gew.-% Acrylnitril mit einer Viskositätszahl VZ von 62 ml/g (bestimmt als 0,5 gew.-%-ige Lösung in Dimethylformamid bei 23°C nach DIN 53727) und einem Brechungsindex von 1,5732 eingesetzt.

### Als Komponente C wurden folgende Kautschuke verwendet:

### C-I:

Pfropfpolymerisat mit 60 Gew.-% (bez. auf Pfropfpolymerisat C-I) eines Pfropfkerns aus Butadien und Styrol (76 Gew.-% Butadien und 24 Gew.-% Styrol, bez. auf das Gewicht des Propfkerns) und 20 Gew.-% (bez. auf Pfropfpolymerisat C-I) einer ersten Pfropfhülle aus Styrol und Methylmethacrylat (90 Gew.-% Styrol und 10 Gew.-% Methylmethacrylat, bez. auf das Gewicht der ersten Pfropfhülle) und 20 Gew.-% (bez. auf Pfropfpolymerisat C-I) einer zweiten Pfopfhülle aus Methylmethacrylat und Ethylacrylat (97 Gew.-% Methylmethacrylat und 3 Gew.-% Ethylacrylat, bez. auf das Gewicht der zweiten Pfropfhülle). Der Brechungsindex des Kautschuks wurde zu 1,5371 bestimmt. Die mittlere Teilchengröße D₅₀ des Kautschukkerns betrug 365 nm bei mono-modaler Teilchengrößenverteilung.

### C-V-I (mit -V- benannte Komponenten sind nicht erfindungsgemäß und dienen zum Vergleich):

Pfropfpolymerisat mit 50 Gew.-% (bez. auf Pfropfpolymerisat C-V-I) eines Pfropfkerns aus Butadien und Styrol (76 Gew.-% Butadien und 24 Gew.-% Styrol, bez. auf das Gewicht des Propfkerns) und 30 Gew.-% (bez. auf Pfropfpolymerisat C-V-I) einer ersten Pfropfhülle aus Styrol (100 Gew.-% Styrol, bez. auf das Gewicht der ersten Pfropfhülle) und 20 Gew.-% (bez. auf Pfropfpolymerisat C-V-I) einer zweiten Pfopfhülle aus Methylmethacrylat und Ethylacrylat (98 Gew.-% Methylmethacrylat und 2 Gew.-% Ethylacrylat, bez. auf das Gewicht der zweiten Pfropfhülle). Der Brechungsindex des Kautschuks wurde zu 1,540 bestimmt. Die mittlere Teilchengröße des Kautschukkerns betrug 45 nm bei mono-modaler Teilchengrößenverteilung.

### C-V-II (mit -V- benannte Komponenten sind nicht erfindungsgemäß und dienen zum Vergleich):

Pfropfpolymerisat mit 50 Gew.-% (bez. auf Pfropfpolymerisat C-V-II) eines Pfropfkerns aus Butadien und Styrol (76 Gew.-% Butadien und 24 Gew.-% Styrol, bez. auf das Gewicht des Propfkerns) und 30 Gew.-% (bez. auf Pfropfpolymerisat C-V-II) einer ersten Pfropfhülle aus Styrol (100 Gew.-% Styrol, bez. auf das Gewicht der ersten Pfropfhülle) und 20 Gew.-% (bez. auf Pfropfpolymerisat C-V-II) einer zweiten Pfopfhülle aus Methylmethacrylat und Ethylacrylat (98 Gew.-% Methylmethacrylat und 2 Gew.-% Ethylacrylat, bez. auf das Gewicht der zweiten Pfropfhülle). Der Brechungsindex des Kautschuks wurde zu 1,540 bestimmt. Die mittlere Teilchengröße des Kautschukkerns betrug 155 nm bei mono-modaler Teilchengrößenverteilung.

Aus den in Tabelle 1 angegebenen Gew.-teilen der Komponenten A, B und C wurden in einer Schmelze bei Temperaturen von 250°C die in Tabelle 1 wiedergegeben Formmassen hergestellt. Die Verarbeitung zu Probekörpern erfolgte falls nicht anders angegeben bei 250°C Masse- und 60°C Werkzeugtemperatur. Die Herstellung der Normstäbe für Kerbschlagzähigkeitsprüfungen erfolgte auch bei 230°C und 270°C Massetemperatur.

**Tabelle 1:**

| Versuchsnr.* | V-1 | V-2 | V-3 | V-4 | 5 | 6 | V-7 |
|---|---|---|---|---|---|---|---|
| Komponenten*: | | | | | | | |
| A | 27 | 31 | 27 | 30,45 | 35,56 | 36,54 | 38,5 |
| B | 37 | 33 | 37 | 39,55 | 34,44 | 33,46 | 31,5 |
| C-I | - | - | - | 30 | 30,0 | 30,0 | 30,0 |
| C-V-I | 5,4 | 5,4 | - | - | - | - | - |
| C-V-II | 30,6 | 30,6 | 36 | - | - | - | - |
| | | | | | | | |
| D₅₀ [nm] | bi | bi | 155 | 365 | 365 | 365 | 365 |
| TGV** | bi | bi | mono | mono | mono | mono | mono |
| Δn*** | 0,001 | 0,0061 | 0,0014 | 0,001 | 0,005 | 0,007 | 0,0085 |

Eigenschaften:

| | | | | | | | | |
|---|---|---|---|---|---|---|---|---|
| MVI [ml/10'] | | 12 | 14,5 | 16,2 | 16,9 | 17,1 | 16,6 | 17,3 |
| ak 230°C | [kJ/m²] | 6,3 | 5,8 | 5,8 | 12,5 | 12,8 | 12,7 | 12,4 |
| 250°C. | [kJ/m²] | 10,8 | 9,1 | 9,5 | 12,9 | 13,1 | 13,3 | 12,9 |
| 270°C | [kJ/m²] | 11,0 | 9,3 | 9,4 | 13,2 | 13,4 | 13,1 | 13,2 |
| Ws | [Nm] | 12,7 | 14,7 | 15,2 | 16,1 | 15,8 | 17,0 | 16,2 |
| T | [%] | 88,5 | 85,7 | 86,3 | 84,9 | 89,5 | 88,6 | 87,2 |
| Haze | [%] | 4,7 | 10,1 | 5,7 | 11,3 | 3,7 | 5,1 | 9,2 |

| | | | | | | | | |
|---|---|---|---|---|---|---|---|---|
| * mit -V- benannte Komponenten oder Versuche sind nicht erfindungsgemäß und dienen zum Vergleich ** Teilchengrößenverteilung: mono = monomodal, bi = bimodal *** Betrag der Differenz aus Brechungsindex (n_{D}-C) der Gesamtkomponente (C) und dem Brechungsindex (n_{D}-AB) der Gesamtmatrix der Komponenten (A) und (B) | | | | | | | | |

Die Beispiele belegen, dass die erfindungsgemäßen Formmassen sehr gute Zähigkeit, Fließfähigkeit und optische Eigenschaften (hohe Transparenz, geringen Haze) besitzen. Die Vergleichsversuche mit kleineren Kautschuken zeigen dagegen das bekannte Verhalten, d.h. niedriger Haze bei Δn nahe 0. Die erfindungsgemäßen Formmassen zeigen außerdem überraschenderweise keine Abhängigkeit der Kerbschlagzähigkeit von den Verarbeitungsbedingungen.

## Patentansprüche

1. Thermoplastische Formmassen, enthaltend eine Mischung aus
(A) 30 bis 69 Gew.-%, bezogen auf die Summe der Komponenten (A), (B) und (C), eines Methylmethacrylat-Polymerisates, erhältlich durch Polymerisation einer Mischung, bestehend aus
(A1) 90 bis 100 Gew.-%, bezogen auf (A), Methylmethacrylat, und
(A2) 0 bis 10 Gew.-%, bezogen auf (A), eines C₁-C₈-Alkylesters der Acrylsäure, und
(B) 30 bis 69 Gew.-%, bezogen auf die Summe der Komponenten (A), (B) und (C), eines Copolymerisates, erhältlich durch Polymerisation einer Mischung, bestehend aus
(B1) 75 bis 88 Gew.-%, bezogen auf (B), eines vinylaromatischen Monomeren und
(B2) 12 bis 25 Gew.-%, bezogen auf (B), eines Vinylcyanids
und
(C) 1 bis 40 Gew.-%, bezogen auf die Summe der Komponenten (A), (B) und (C), eines Pfropfcopolymerisates, erhältlich aus
(C1) 60 bis 90 Gew.-%, bezogen auf (C), eines Kerns, erhältlich durch Polymerisation eines Monomerengemisches, bestehend aus
(C11) 65 bis 89,9 Gew.-%, bezogen auf (C1), eines 1,3-Diens,
(C12) 10 bis 34,9 Gew.-% bezogen auf (C1), eines vinylaromatischen Monomeren,
(C13) 0,1 bis 5 Gew.-%, bezogen auf (C1), eines Agglomerationspolymerisates
und
(C2) 5 bis 20 Gew.-%, bezogen auf (C), einer ersten Pfropfhülle, erhältlich durch Polymerisation eines Monomerengemisches, bestehend aus
(C21) 30 bis 39 Gew.-%, bezogen auf (C2), eines vinylaromatischen Monomeren
(C22) 61 bis 70 Gew.-%, bezogen auf (C2), eines C₁-C₈-Alkylesters der Methacrylsäure und
(C23) 0 bis 3 Gew.-%, bezogen auf (C2), eines vernetzenden Monomeren,
und
(C3) 5 bis 20 Gew.-%, bezogen auf (C), einer zweiten Pfropfhülle, erhältlich durch Polymerisation eines Monomerengemisches, bestehend aus
(C31)70 bis 98 Gew.-%, bezogen auf (C3), eines C₁-C₈-Alkylesters der Methacrylsäure und
(C32)2 bis 30 Gew.-%, bezogen auf (C3), eines C₁-C₈-Alkylesters der Acrylsäure,
und
(D) gegebenenfalls üblichen Zusatzstoffen in Mengen von bis zu 20 Gew.-%, bezogen auf die Summe der Komponenten (A), (B) und (C),
mit der Maßgabe, dass das Gewichtsverhältnis von (C2) zu (C3) im Bereich von 2:1 bis 1:2 liegt,
**dadurch gekennzeichnet, dass**
- der Kern (C1) eine monomodale Teilchengrößenverteilung aufweist,
- die mittlere Teilchengröße D₅₀ des Kerns (C1) (bestimmt nach der in der Beschreibung genannten Methode) im Bereich von 300 bis 400 nm liegt und
- der Betrag der Differenz aus Brechungsindex (n_{D}-C) der Gesamtkomponente (C) und dem Brechungsindex (n_{D}-AB) der Gesamtmatrix der Komponenten (A) und (B) im Bereich von 0,003 bis 0,008 liegt, wobei die Brechungsindices jeweils nach den in der Beschreibung genannten Methoden bestimmt werden.

2. Thermoplastische Formmassen nach Anspruch 1, **dadurch gekennzeichnet, dass** die mittlere Teilchengröße D₅₀ des Kerns (C1) (bestimmt nach der in der Beschreibung genannten Methode) im Bereich von 320 bis 380 nm liegt.

3. Thermoplastische Formmassen nach Ansprüchen 1 bis 2, **dadurch gekennzeichnet, dass** der Betrag der Differenz aus Brechungsindex (n_{D}-C) der Gesamtkomponente (C) und dem Brechungsindex (n_{D}-AB) der Gesamtmatrix der Komponenten (A) und (B) im Bereich von 0,004 bis 0,007 liegt, wobei die Brechungsindices jeweils nach den in der Beschreibung genannten Methoden bestimmt werden.

4. Thermoplastische Formmassen nach Ansprüchen 1 bis 3, **dadurch gekennzeichnet, dass** als vinylaromatisches Monomeres Styrol verwendet wird.

5. Thermoplastische Formmassen nach einem der Ansprüche 1 bis 4, wobei das Pfropfcopolymerisat (C) einen Quellungsindex Ql von 10 bis 40 aufweist, wobei der Quellungsindex QI nach der in der Beschreibung genannten Methoden bestimmt wird.

6. Verfahren zur Herstellung der thermoplastischen Formmassen gemäß einem der Ansprüche 1 bis 5, **dadurch gekennzeichnet, dass** man die Komponenten (A), (B), (C) und gegebenenfalls (D) in der Schmelze vermischt.

7. Verwendung der thermoplastischen Formmassen gemäß einem der Ansprüche 1 bis 5 zur Herstellung von Formkörpern.

8. Formkörper, enthaltend thermoplastische Formmassen gemäß einem der Ansprüche 1 bis 5.

## Claims

1. A thermoplastic molding composition, comprising a mixture of
(A) from 30 to 69% by weight, based on the sum of components (A), (B) and (C), of a methyl methacrylate polymer obtainable by polymerizing a mixture consisting of
(A1) from 90 to 100% by weight, based on (A), of methyl methacrylate, and
(A2) from 0 to 10% by weight, based on (A), of a C₁-C₈-alkyl ester of acrylic acid, and
(B) from 30 to 69% by weight, based on the sum of components (A), (B) and (C), of a copolymer obtainable by polymerizing a mixture consisting of
(B1) from 75 to 88% by weight, based on (B), of a styrenic monomer and
(B2) from 12 to 25% by weight, based on (B), of a vinyl cyanide
and
(C) from 1 to 40% by weight, based on the sum of components (A), (B) and (C), of a graft copolymer obtainable from
(C1) from 60 to 90% by weight, based on (C), of a core obtainable by polymerizing a monomer mixture consisting of
(C11) from 65 to 89.9% by weight, based on (C1), of a 1,3-dienen,
(C12) from 10 to 34.9% by weight, based on (C1), of a styrenic monomer
(C13) from 0.1 to 5% by weight, based on (C1), of an agglomeration Polymer
and
(C2) from 5 to 20% by weight, based on (C), of a first graft shell obtainable by polymerizing a monomer mixture consisting of
(C21) from 30 to 39% by weight, based on (C2), of a styrenic monomer
(C22) from 61 to 70% by weight, based on (C2) of a C₁-C₈-alkyl ester of methacrylic acid and
(C23) from 0 to 3% by weight, based on (C2), of a crosslinking monomer,
and
(C3) from 5 to 20% by weight, based on (C), of a second graft shell obtainable by polymerizing a monomer mixture consisting of
(C31) from 70 to 98% by weight, based on (C3), of a C₁-C₈-alkyl ester or methacrylic acid and
(C32) from 2 to 30% bey weight, based on (C3), of a C₁-C₈-alkyl ester of acrylic acid
and
(D) if appropriate, customary additives in amounts of up to 20% by weight, based on the sum of components (A), (B) and (C),
with the proviso that the weight ratio of (C2) to (C3) is in the range from 2:1 to 1:2,
wherein
- the core (C1) has a monomodal particle size distribution,
- the mean particle size D₅₀ of the core (C1) (determined by the method cited in the description) is in the range from 300 to 400 nm and
- the magnitude of the difference of refractive index (n_{D}-C) of the overall component (C) and the refractive index (n_{D}-AB) of the overall matrix of components (A) and (B) is in the range from 0.003 to 0.008, the refractive indices each being determined by the methods cited in the description.

2. The thermoplastic molding composition according to claim 1, wherein the mean particle size D₅₀ of the core (C1) (determined by the method cited in the description) is in the range from 320 to 380 nm.

3. The thermoplastic molding composition according to claims 1 and 2, wherein the magnitude of the difference of refractive index (n_{D}-C) of the overall component (C) and the refractive index (n_{D}-AB) of the overall matrix of components (A) and (B) is in the range from 0.004 to 0,007, the refractive indices each being determined by the methods specified in the description.

4. The thermoplastic molding composition according to claims 1 to 3, wherein the styrenic monomer used is styrene.

5. The thermoplastic molding composition according to any of claims 1 to 4, wherein the graft copolymer (C) has a swelling index Si of from 10 to 40, the swelling index Si being determined by the methods specified in the description.

6. A process for producing thermoplastic molding compositions according to any of claims 1 to 5, which comprises mixing components (A), (B), (C) and, if appropriate, (D) in the melt.

7. The use of the thermoplastic molding composition according to any of claims 1 to 5 for producing moldings.

8. A molding comprising the thermoplastic molding composition according to any of claims 1 to 5.

## Revendications

1. Masses de moulage thermoplastiques contenant un mélange de :
(A) 30 à 69% en poids, par rapport à la somme des composants (A), (B) et (C), d'un polymère de méthacrylate de méthyle que l'on peut obtenir par polymérisation d'un mélange constitué de :
(A1) 90 à 100% en poids, par rapport au composant (A), de méthacrylate de méthyle, et
(A2) 0 à 10% en poids, par rapport au composant (A), d'un ester d'alkyle en C₁-C₈ de l'acide acrylique, et
(B) 30 à 69% en poids, par rapport à la somme des composants (A), (B) et (C), d'un copolymère que l'on peut obtenir par polymérisation d'un mélange constitué de :
(B1) 75 à 88% en poids, par rapport au composant (B), d'un monomère vinylaromatique, et
(B2) 12 à 25% en poids, par rapport au composant (B), d'un cyanure de vinyle, et
(C) 1 à 40% en poids, par rapport à la somme des composants (A), (B) et (C), d'un copolymère greffé que l'on peut obtenir à partir de :
(C1) 60 à 90% en poids, par rapport au composant (C), d'un noyau que l'on peut obtenir par polymérisation d'un mélange de monomères constitué de :
(C11) 65 à 89,9% en poids, par rapport au composant (C1), d'un 1,3-diène,
(C12) 10 à 34,9% en poids, par rapport au composant (C1), d'un monomère vinylaromatique,
et
(C13) 0,1 à 5% en poids, par rapport au composant (C1), d'un polymère d'agglomération,
et
(C2) 5 à 20% en poids, pair rapport au composant (C), d'une première enveloppe greffée que l'on peut obtenir par polymérisation d'un mélange de monomères constitué de :
(C21) 30 à 39% en poids, par rapport au composant (C2), d'un monomère vinylaronatique,
(C22) 61 à 70% en poids, par rapport au composant (C2), d'un ester d'alkyle en C₁-C₈ de l'acide méthacrylique, et
(C23) 0 à 3% en poids, par rapport au composant (C2), d'un monomère de réticulation, et
(C3) 5 à 20% en poids, par rapport au composant (C), d'une seconde enveloppe greffée que l'on peut obtenir par polymérisation d'un mélange de monomères constitué de :
(C31) 70 à 98% en poids, pair rapport au composant (C3), d'un ester d'alkyle en C₁-C₈ de l'acide méthacrylique, et
(C32) 2 à 30% en poids, par rapport au composant (C3), d'un ester d'alkyle en C₁-C₈ de l'acide acrylique, et
(D) éventuellement, d'additifs courants en quantités jusqu'à 20% en poids par rapport à la somme des composants (A), (B) et (C),
à condition que le rapport pondéral du composant (C2) au composant (C3) se situe dans la plage de 2:1 à 1:2,
**caractérisées en ce que**
- le noyau (C1) présente une distribution de tailles de particules monomodale,
- la taille de particules moyenne D₅₀ du noyau (C1) (déterminée selon le procédé mentionné dans la description) est comprise dans la plage de 300 à 400 nm et
- la valeur de la différence de l'indice de réfraction (n_{D}-C) du composant total (C) et de l'indice de réfraction (n_{D}-AB) de la matrice totale des composants (A) et (B) est de l'ordre de 0,003 à 0,008, les indices de réfraction étant à chaque fois déterminés selon les procédés mentionnés dans la description.

2. Masses de moulage thermoplastiques selon La revendication 1, **caractérisées en ce que** la taille de particules moyenne D₅₀ du noyau (C1) (déterminée selon le procédé mentionné dans la description) est de l'ordre de 320 à 380 nm.

3. Masses de moulage thermoplastiques selon les revendications 1 à 2, **caractérisées en ce que** la valeur de la différence de l'indice de réfraction (n_{D}-C) du composant total (C) et de l'indice de réfraction (n_{D}-AB) de la matrice totale des composants (A) et (B) est de l'ordre de 0,004 à 0,007, les indices de réfraction étant à chaque fois déterminés selon les procédés mentionnés dans la description.

4. Masses de moulage thermoplastiques selon les revendications 1 à 3, dans lesquelles on utilise le styrène comme monomère vinylaromatique.

5. Masses de moulage thermoplastiques selon l'une quelconque des revendications 1 à 4, dans lesquelles le copolymère greffé (C) présente un indice de gonflement QI de 10 à 40, l'indice de gonflement QI étant déterminé selon les procédés mentionnés dans la description.

6. Procédé de fabrication de masses de moulage thermoplastiques selon l'une quelconque des revendications 1 à 5, **caractérisé en ce que** l'on mélange les composants (A), (B), (C) et, éventuellement, (D) dans la masse fondue.

7. Utilisation des masses de moulage thermoplastiques selon, l'une quelconque des revendications 1 à 5, pour la fabrication de corps de moulage.

8. Corps de moulage contenant des masses de moulage thermoplastiques selon l'une quelconque des revendications 1 à 5.
